# EUROPÄISCHE PATENTSCHRIFT

(11) **EP 1 400 162 B1**
(45) Veröffentlichungstag und Bekanntmachung des Hinweises auf die Patenterteilung: **17.05.2006**
(21) Anmeldenummer: 03102570.3
(22) Anmeldetag: 18.08.2003
(51) Int. Cl.: A01D 75/20

(54) **Sicherheitseinrichtung einer Erntemaschine**
Security device of a harvester
Dispositif de sécurité pour une machine de récolte

(30) Priorität: 19.09.2002 DE 10243527
(43) Veröffentlichungstag der Anmeldung: 24.03.2004
(73) Patentinhaber: DEERE & COMPANY, Moline, Illinois 61265-8098 (US)
(72) Erfinder: Kempf, Bernd, 66484, Althornbach (DE)
(74) Vertreter: Holst, Sönke

(56) Entgegenhaltungen:
- US-A- 4 323 136
- US-A- 4 345 418
- US-A- 4 456 109

## Beschreibung

Die Erfindung betrifft einen Feldhäcksler mit einer rotativ antreibbaren Gutbearbeitungseinrichtung in Form einer Häckseltrommel und einer Sicherheitseinrichtung, wobei die Drehung der Gutbearbeitungseinrichtung durch eine Bremse anhaltbar ist.

Bei selbstfahrenden Feldhäckslern hat die Häckseltrommel nach dem Ausschalten des Antriebs auf Grund ihres recht großen Trägheitsmoments eine relativ lange Nachlaufzeit. Sollte sich ein Bediener darauf verlassen, dass die Häckseltrommel bereits steht und öffnet kurz nach dem Ausschalten des Antriebs die Schutzvorrichtungen der Häckseltrommel, um einen Gutstau zu beseitigen oder um die Maschine zu reinigen, ist er somit einem hohen Gefahrenpotenzial ausgesetzt. Es wurde in den nachveröffentlichten Druckschriften US 6 690 285 B und EP 1 387 230 A vorgeschlagen, bei sich drehender Häckseltrommel ein Alarmsignal zu geben, um den Bediener darauf aufmerksam zu machen, dass sich die Häckseltrommel noch dreht. Derartige Alarmsignale werden jedoch auch dann gegeben, wenn der Bediener keinen Zugang zur Häckseltrommel beabsichtigt, weshalb sie manchmal als störend empfunden werden. Außerdem beseitigen sie nicht die von der Häckseltrommel ausgehende Gefahr.

In der DD 219 651 A wird ein Getriebe für Häckseleinrichtungen vorgeschlagen, das eine Bremse für die Zuführeinrichtung und den Antrieb des Vorsatzes umfasst, die auch auf das Häckselaggregat wirkt. Die Bremse wird durch eine Fremdkörpersignalisierung automatisch eingeschaltet. Sie dient somit nur dem Schutz der Häckseltrommel vor eindringenden Fremdkörpern. Sie kann die vom Häckselaggregat ausgehende Gefahr nicht unterbinden, wenn der Bediener den Antrieb ausschaltet, da sich das Häckselaggregat dann ungebremst weiterdreht.

Die US 4 974 711 A und US 4 345 418 A beschreiben eine Steuerung für die Bremse und Kupplung eines Rasenmähers. Wegen der wesentlich kleineren Trägheitsmomente der Messer eines Rasenmähers übernimmt der Fachmann aus dieser Druckschrift keine Anregung, diese Steuerung für einen landwirtschaftlichen Feldhäcksler eingangs genannter Art zu verwenden.

Das der Erfindung zu Grunde liegende Problem wird darin gesehen, eine Lösung bereitzustellen, die dem Bediener nach dem Abschalten des Antriebs einer Häckseltrommel eines Feldhäckslers einen gefahrlosen Zugang zur Häckseltrommel ermöglicht.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Bremse mit einer Steuerung zu koppeln, die erfasst, ob eine Bedienersicherheitsbedingung erfüllt ist. Nur wenn die Bedienersicherheitsbedingung erfüllt ist, was der Fall ist, wenn davon ausgegangen werden kann, dass von der Gutbearbeitungseinrichtung keine Gefährdung für den Bediener ausgeht, veranlasst die Steuerung, dass die Bremse gelöst wird. Anderenfalls befindet sich die Bremse in ihrer Wirkstellung.

Auf diese Weise erreicht man, dass die Gutbearbeitungseinrichtung durch die Bremse angehalten wird, solange die Bedienersicherheitsbedingung nicht erfüllt ist, so dass das Gefährdungspotenzial für den Bediener vermindert wird.

Es ist zweckmäßig, zwischen die Gutbearbeitungseinrichtung und ihren Antrieb eine Kupplung zu schalten, die ebenfalls durch die eine Bedienersicherheitsbedingung erfassende Steuerung kontrolliert wird. Die Steuerung öffnet die Kupplung, wenn sie die Bremse betätigt und schließt die Kupplung, wenn sie die Bremse löst. Dadurch erreicht man, dass die Bremse nicht die Antriebswirkung des Antriebs überwinden muss. Die Schaltvorgänge von Kupplung und Bremse können synchron oder mit einer gewissen Zeitverzögerung durchgeführt werden.

Die Bedienersicherheitsbedingung kann als erfüllt gelten, wenn sich der Bediener an einer Stelle aufhält, an der er nicht durch die Gutbearbeitungseinrichtung gefährdet ist, z. B. in einer Fahrerkabine, und wenn der Bediener den Betrieb der Gutbearbeitungseinrichtung veranlasst hat, da dann davon auszugehen ist, dass er sich nicht darauf verlässt, dass die Gutbearbeitungseinrichtung ruht. Daher bietet es sich an, die Steuerung der Bremse mit einem Betriebsschalter für die Gutbearbeitungseinrichtung zu koppeln, um festzustellen, ob der Bediener einen Betrieb der Gutbearbeitungseinrichtung beabsichtigt. Analog kann die Steuerung mit einem Zündschalter der insbesondere selbstfahrenden Erntemaschine bzw. eines sie bewegenden Trägerfahrzeugs verbunden sein. Nur bei eingeschaltetem Zündschalter ist ein Lösen der Bremse sinnvoll. Alternativ oder zusätzlich kann am Arbeitsplatz eines Bedieners, in der Regel in einer Fahrerkabine oder ein offener Fahrerstand, ein Anwesenheitsschalter vorhanden sein. Der Anwesenheitsschalter, z. B. ein Sitzschalter, der nur dann betätigt ist, wenn eine Belastung auf dem Bedienersitz ruht, ist nur dann eingeschaltet, wenn der Bediener sich an seinem Arbeitsplatz befindet. Auch nur dann veranlasst die Steuerung ein Lösen der Bremse. Steht der Bediener von seinem Arbeitsplatz auf, wird selbsttätig die Bremse aktiviert und die Gutbearbeitungseinrichtung angehalten, auch wenn er die Gutbearbeitungseinrichtung und/oder die Zündung nicht ausschaltet, so dass der Bediener sich nicht verletzen kann.

Die Bremse wird vorzugsweise hydraulisch betätigt. Um beispielsweise auch bei einem unbeabsichtigten Druckabfall in der Bordhydraulik oder beim Abschalten des Antriebsmotors ein Anhalten der Gutbearbeitungseinrichtung zu gewährleisten, ist es sinnvoll, die Bremse durch eine Feder in ihre Bremsposition vorzuspannen und sie hydraulisch zu lösen. Dadurch gelangt die Bremse selbsttätig in die Bremsposition, wenn der Hydraulikdruck abfällt.

Bei verschiedenen Erntemaschinen steht in der Nachbarschaft der Gutbearbeitungseinrichtung nur wenig Raum zur Aufnahme der Bremse zu Verfügung. So steht bei Feldhäckslern mit quer zur Fahrtrichtung eingebauten Häckseltrommeln und bei Mähdreschern mit ebenfalls quer zur Fahrtrichtung angeordneten Dreschtrommeln neben den Gutbearbeitungseinrichtungen kaum Platz zur Verfügung, da die Gesamtbreiten der Erntemaschinen durch die Straßenverkehrsordnungen festgelegt sind und die Gutbearbeitungseinrichtungen einen großen Anteil der zwischen den Rädern verbleibenden Breite einnehmen. Es erweist sich daher als vorteilhaft, die Bremse im Abstand von der Gutbearbeitungseinrichtung anzuordnen und durch eine geeignete Antriebsverbindung mit ihr zu verbinden.

Eine derartige Antriebsverbindung kann durch einen spannbaren Treibriemen realisiert werden. Der zum Spannen dienende Hydraulikzylinder ist in einer bevorzugten Ausführungsform mit einem Druckspeicher verbunden, der ein Weiterbestehen der Antriebsverbindung auch nach einem Druckabfall in der Druckversorgung für eine zum Anhalten der Gutbearbeitungseinrichtung hinreichende Zeitspanne gewährleistet. Ein derartiger Druckspeicher ist auch für andere lösbare Antriebsverbindungen, die eine Antriebskupplung darstellen, verwendbar, z. B. hydraulisch betätigte Scheibenkupplungen.

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung, und
- Fig. 2: ein Schema des Antriebs der Häckseltrommel und der Sicherheitseinrichtung der Erntemaschine.

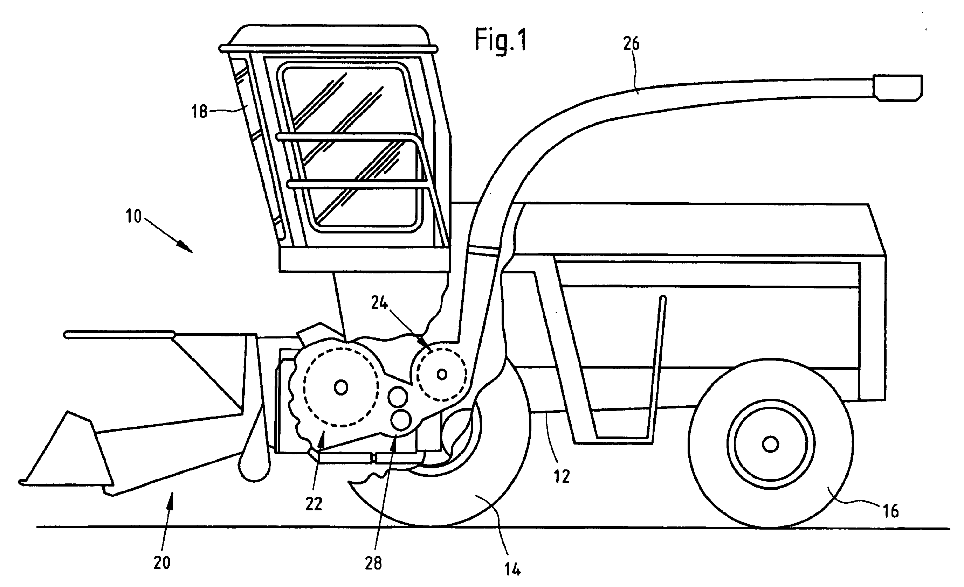

In der Figur 1 ist eine Erntemaschine 10 in der Art eines selbstfahrenden Feldhäckslers dargestellt. Der Feldhäcksler baut sich auf einem Rahmen 12 auf, der von vorderen Rädern 14 und lenkbaren, rückwärtigen Rädern 16 getragen wird. Die Bedienung des Feldhäckslers erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird über Zuführwalzen, die innerhalb eines Einzugsgehäuses angeordnet sind, einer Häckseltrommel 22 zugeführt, die es im Zusammenwirken mit einer Gegenschneide in kleine Stücke häckselt und es einer Fördervorrichtung 24 aufgibt. Das Gut verläßt den Feldhäcksler zu einem nebenherfahrenden Transportfahrzeug oder Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

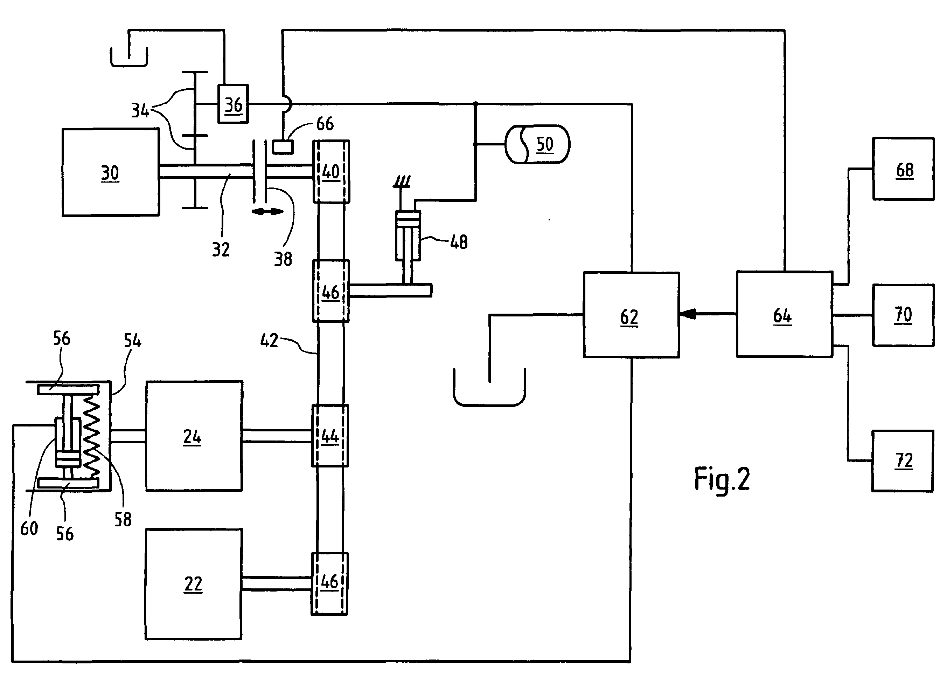

In der Figur 2 ist der Antrieb der Häckseltrommel 22 schematisch dargestellt. Ein Antriebsmotor 30, in der Regel ein Dieselmotor oder anderer Motor mit innerer Verbrennung, stellt die Antriebsleistung bereit, die zum Vortrieb und zum Antrieb der Ernteeinrichtungen der Erntemaschine 10 benötigt werden. Die Ausgangswelle 32 des Antriebsmotors 30 treibt über ein Zahnradpaar 34 eine Hydraulikpumpe 36 an, die zur Versorgung der Bordhydraulik der Erntemaschine 10 mit unter Druck stehendem Hydraulikfluid dient. Sie (oder eine andere Hydraulikpumpe) erzeugt auch den Hydraulikfluss für hydraulische Vortriebsmotoren, die die Räder 14, 16 antreiben. Außerdem steht die Ausgangswelle 32 über eine elektrisch geschaltete Kupplung 38 mit einer Riemenscheibe 40 in Antriebsverbindung. Die Kupplung 38 könnte auch hydraulisch geschaltet werden. Um die Riemenscheibe 40 verläuft ein Treibriemen 42, der außerdem mit Riemenscheiben 44 und 46 zusammenwirkt. Die Riemenscheibe 44 steht mit der Fördervorrichtung 24 in Antriebsverbindung, während die Riemenscheibe 46 mit der Häckseltrommel 22 in Antriebsverbindung steht. Eine Spannrolle 46 ist durch einen Hydraulikzylinder 48 in eine Position verbringbar, in der sie den Treibriemen 42 derart spannt, dass er eine Antriebsverbindung zwischen den Riemenscheiben 40, 44 und 46 bereitstellt.

Nach dem Anlassen des Antriebsmotors 30 stellt die Hydraulikpumpe 36 einen Druck des Hydraulikfluids im Hydrauliksystem bereit, der den damit verbundenen Hydraulikzylinder 48 veranlasst, die Spannrolle 46 in eine Position zu verbringen, in der der Treibriemen 42 die Antriebsverbindung zwischen den Riemenscheiben 40, 44, 46 herstellt. Der Hydraulikzylinder 48 ist durch einen Druckspeicher 50 abgepuffert.

Die Häckseltrommel 22 stellt, wie auch die Fördereinrichtung 24 und der Treibriemen 42 in ihrem rotierenden Zustand ein beträchtliches Gefahrenpotenzial für einen Bediener dar, der in die Nähe ihres Wirkungsbereichs kommt, um beispielsweise Verstopfungen zu entfernen. Zur Verbesserung der Arbeitssicherheit des Bedieners ist eine Sicherheitseinrichtung mit einer Bremse 52, einer Ventileinrichtung 62 und einer Steuerung 64 vorgesehen. Die Bremse 52 weist einen drehmomentschlüssig mit der Fördereinrichtung 24 gekoppelten Körper 54 und darin angeordnete Bremsbacken 56 auf. Die Bremsbacken 56 sind durch eine Feder 58 in ihre Bremsposition vorgespannt. Ein Bremslüftzylinder 60 ist eingerichtet, die Bremsbacken 56 zusammenzuziehen, um sie vom Körper 54 abzuziehen und die Bremse 52 zu lösen. Die Anbringung der Bremse 52 auf der Welle der Fördereinrichtung 24 hat den Vorteil, dass an dieser Stelle hinreichend Raum zur Verfügung steht, während im Bereich der Häckseltrommel 22, die breiter als die Fördereinrichtung 24 ist, wesentlich weniger Raum bleibt.

Der Bremslüftzylinder 60 ist hydraulikflüssigkeitsleitend mit der Ventileinrichtung 62 verbunden, die ihrerseits mit der Hydraulikpumpe 36 in Verbindung steht. Die Ventileinrichtung 62 ist elektromagnetisch durch die zum Nachweis einer Bedienersicherheitsbedingung eingerichtete Steuerung 64 betätigbar. Die Steuerung 64 ist außerdem elektrisch mit einem Steuermagneten 66 der elektrisch geschalteten Kupplung 38 verbunden. Eingänge der Steuerung 64 sind mit einem Zündschalter 68, einem Häckseltrommelbetriebsschalter 70 und einem Anwesenheitssensor 72 verbunden. Der Zündschalter 68 dient zum Anlassen des Antriebsmotors 30 und um ihn anzuhalten und ist durch an sich bekannte Verbindungen (aus Gründen der Übersichtlichkeit nicht eingezeichnet) mit dem Antriebsmotor 30 gekoppelt. Der Häckseltrommelbetriebsschalter 70 ist wie der Zündschalter 68 in der Fahrerkabine 18 angeordnet und dient dazu, den Ernte- und Häckselbetrieb zu aktivieren und zu beenden. Der Anwesenheitssensor 72 ist eingerichtet, zu überprüfen, ob der Bediener sich in der Fahrerkabine 18 befindet. Er kann in Form eines Sitzschalters realisiert sein, der die Belastung des Sitzes erfasst. Es ist aber auch eine Verwendung einer Lichtschranke, eines Infrarotsensors oder einer Kamera denkbar, um festzustellen, ob sich der Bediener in der Fahrerkabine 18 aufhält oder nicht.

Der Betrieb der Erntemaschine 10 mit der Sicherheitseinrichtung verläuft folgendermaßen, wobei davon ausgegangen wird, dass der Antriebsmotor 30 zunächst stillsteht. Betätigt ein Bediener in der Fahrerkabine 18 den Zündschalter 68, wird zunächst der Antriebsmotor 30 angelassen. Die Hydraulikpumpe 36 stellt einen hinreichenden Druck im Bordhydrauliksystem bereit, so dass der Hydraulikzylinder 48 die Spannrolle 46 in ihre Spannposition verbringt. Der Treibriemen 42 ist somit gespannt, solange der Antriebsmotor 30 läuft. Die Bremse 52 befindet sich durch die Wirkung der Feder 58 in der Bremsposition. Befindet sich der Bediener an seinem Arbeitsplatz in der Fahrerkabine 18, so dass der Anwesenheitssensor 72 der Steuerung 64 die Anwesenheit des Bedieners signalisiert, und aktiviert der Bediener den Häckseltrommelbetriebsschalter 70, so veranlasst die Steuerung 64 die Ventileinrichtung 62, den Bremslüftzylinder 60 mit von der Hydraulikpumpe 36 bereitgestellter Hydraulikflüssigkeit zu beaufschlagen. Der Bremslüftzylinder 60 wird somit nur dann beaufschlagt, wenn der Zündschalter 68 und der Häckseltrommelbetriebsschalter 70 eingeschaltet sind und der Anwesenheitssensor 72 einen Bediener am Arbeitsplatz erfasst. Dadurch zieht der Bremslüftzylinder 60 die Bremsbacken 56 vom Körper 54 der Bremse 52 ab, letztere kann sich nunmehr frei drehen. Danach oder gleichzeitig veranlasst die Steuerung 64 den Steuermagneten 66 der elektrisch geschalteten Kupplung 38, die Kupplung 38 zu schließen, so dass die Häckseltrommel 22 und die Fördereinrichtung 24 über den Treibriemen 42 in Drehung versetzt werden. Die anzutreibenden Förderelemente der Erntegutaufnahmevorrichtung 20 und die Zuführwalzen werden in an sich bekannter Weise mechanisch von der Häckseltrommel 22 her und/oder durch separate Hydraulikmotoren angetrieben.

Falls der Bediener nun den Häckseltrommelbetriebsschalter 70 ausschaltet, veranlasst die Steuerung 64, dass der Steuermagnet 66 die Kupplung 38 auftrennt. Gleichzeitig oder kurz danach veranlasst die Steuerung 64, dass die Ventileinrichtung 62 den Bremslüftzylinder 60 drucklos schaltet. Dadurch drückt die Feder 58 die Bremsbacken 56 in die Bremsposition und die Bremse verzögert die Häckseltrommel 22 über die Antriebsverbindung mit der Fördereinrichtung 24. Die Häckseltrommel 24 kommt auf diese Weise in kurzer Zeit zum Stehen. Hat der Bediener die Häckseltrommel angehalten, weil er einen Gutstau oder eine andere Störung festgestellt hat, kann er nunmehr gefahrlos die Häckseltrommel 22 und die anderen Förderelemente untersuchen. Analog veranlasst die Steuerung 64 aufgrund des Signals des Anwesenheitssensors 72 ein Öffnen der Kupplung 38 und eine Aktivierung der Bremse 52, wenn der Bediener die Fahrerkabine 18 verlässt, obwohl der Häckseltrommelbetriebsschalter 70 noch eingeschaltet ist und sich demnach die Häckseltrommel 22 noch dreht. Auch beim Abschalten des Zündschalters 68 veranlasst die Steuerung 64, dass die Kupplung 38 geöffnet und die Bremse 52 aktiviert wird. Außerdem sinkt dann der Hydraulikdruck der Hydraulikpumpe 36 ab, was dazu führt, dass auch der Druck im Bremslüftzylinder 60 absinkt, wodurch die Feder 58 die Bremse 52 in die Bremsstellung verbringt. Anzumerken ist, dass die Steuerung 64 bei auf Abwesenheit des Bedieners 72 hinweisenden Signalen des Anwesenheitssensors 72 während des Zeitraums, in dem sich die Häckseltrommel 22 noch dreht oder drehen könnte, einen akustischen und/oder optischen Alarm generieren kann.

Der Druckspeicher 50 stellt sicher, dass nach dem Abschalten der Zündung oder wenn der Antriebsmotor 30 aus anderen Gründen zum Stehen kommt - z. B. durch Überlastung oder Leerfahren des Kraftstofftanks - und dem sich daraus ergebenden Abschalten der Hydraulikpumpe 36 für eine hinreichend lange Zeitspanne ein ausreichender Druck am Hydraulikzylinder 48 anliegt, so dass die Spannrolle 46 in ihrer Arbeitsposition verbleibt und die Antriebsverbindung zwischen der Häckseltrommel 22 und der Bremse 52 aufrechterhalten bleibt. Es könnte sich als sinnvoll erweisen, geeignete Sperrventile (nicht eingezeichnet) zwischen dem Druckspeicher 50 und den übrigen Elementen der Bordhydraulik vorzusehen, damit in diesem Fall die Bordhydraulik nicht den Druck aus dem Druckspeicher 50 absorbiert.

## Patentansprüche

1. Feldhäcksler (10) mit einer rotativ antreibbaren Gutbearbeitungseinrichtung (22) in Form einer Häckseltrommel und einer Sicherheitseinrichtung, wobei die Drehung der Gutbearbeitungseinrichtung (22) durch eine Bremse (52) anhaltbar ist, **dadurch gekennzeichnet, dass** die Sicherheitseinrichtung eine zum Nachweis einer Bedienersicherheitsbedingung eingerichtete Steuerung (64) umfasst, die derart mit der Bremse (52) gekoppelt ist, dass die Bremse (52) eine Bremswirkung auf die Gutbearbeitungseinrichtung (22) ausübt, wenn die Bedienersicherheitsbedingung nicht erfüllt ist.

2. Feldhäcksler (10) nach Anspruch 1, **dadurch gekennzeichnet, dass** die Steuerung (64) eingerichtet ist, eine zwischen die Gutbearbeitungseinrichtung und einen Antrieb der Gutbearbeitungseinrichtung geschaltete Kupplung (38) entsprechend der Bedienersicherheitsbedingung anzusteuern, und dass die Steuerung (64) die Bremse (52) zumindest näherungsweise synchron mit der Kupplung (38) ansteuert.

3. Feldhäcksler (10) nach Anspruch 1 oder 2, **dadurch gekennzeichnet, dass** die Steuerung (64) mit einem Betriebsschalter (70) für die Gutbearbeitungseinrichtung und/oder einem zum Nachweis der Anwesenheit eines Bedieners an der Bedienerposition eingerichteten Anwesenheitssensor (72) und/oder einen zum Ein- und Ausschalten des Betriebs eines Antriebsmotors (30) eingerichteten Zündschalter (68) verbunden ist.

4. Feldhäcksler (10) nach einem der Ansprüche 1 bis 3, **dadurch gekennzeichnet, dass** die Bremse (52) hydraulisch ein- und ausschaltbar ist.

5. Sicherheitseinrichtung nach Anspruch 4, **dadurch gekennzeichnet, dass** die Bremse (52) durch eine Feder (58) in die Bremsposition vorgespannt und durch den Druck des von einer durch den Antriebsmotor (30) angetriebenen Hydraulikpumpe (36) bereitgestellten Hydraulikfluids lösbar ist.

6. Feldhäcksler (10) nach Anspruch 5, **dadurch gekennzeichnet, dass** die Bremse (52) durch den abfallenden Druck des Hydraulikfluids beim Abschalten des Antriebsmotors (30) selbsttätig in die Bremsposition gelangt.

7. Feldhäcksler (10) nach einem der Ansprüche 1 bis 6, **dadurch gekennzeichnet, dass** die Bremse (52) durch eine Antriebsverbindung mit der Gutbearbeitungseinrichtung gekoppelt und im Abstand von ihr angeordnet ist.

8. Feldhäcksler (10) nach Anspruch 7, **dadurch gekennzeichnet, dass** die Antriebsverbindung zwischen der Bremse (52) und der Gutbearbeitungseinrichtung durch eine hydraulisch betätigte Antriebskupplung herstell- und trennbar ist, dass die Antriebskupplung durch einen Hydraulikantrieb (48) betätigbar ist, der durch den Druck des von einer durch den Antriebsmotor (30) angetriebenen Hydraulikpumpe (36) bereitgestellten Hydraulikfluids betreibbar ist, und dass der Druck des Hydraulikfluids durch einen Druckspeicher (50) gepuffert ist, so dass der Druck des Hydraulikfluids im Hydraulikantrieb (48) nach dem Abschalten des Antriebsmotors (30) für eine hinreichende Zeit bestehen bleibt, während der auch die Antriebskupplung eingekuppelt bleibt und die Bremse (52) auf die Gutbearbeitungseinrichtung wirken kann.

## Claims

1. Field chopper (10) having a crop processing device (22) which can be driven in rotation in the form of a chopper drum and a safety device, rotation of the crop processing device (22) being able to be stopped by means of a brake (52), **characterised in that** the safety device includes a control unit (64) which is equipped to detect an operator safety condition and is coupled to the brake (52) such that the brake (52) exerts a braking effect on the crop processing device (22) if the operator safety condition is not fulfilled.

2. Field chopper (10) according to claim 1, **characterised in that** the control unit (64) is equipped to actuate a clutch (38) which is connected between the crop processing device and a drive of the crop processing device corresponding to the operator safety condition and **in that** the control unit (64) actuates the brake (52) at least approximately synchronously with the clutch (38).

3. Field chopper (10) according to claim 1 or 2, **characterised in that** the control unit (64) is connected to an operating switch (70) for the crop processing device and/or to a presence sensor (72) which is equipped to detect the presence of an operator at the operator position and/or to an ignition switch (68) which is equipped to switch the operation of a drive motor (30) on and off.

4. Field chopper (10) according to one of the claims 1 to 3, **characterised in that** the brake (52) can be switched on and off hydraulically.

5. Safety device according to claim 4, **characterised in that** the brake (52) is prestressed by a spring (58) into the braking position and can be released by the pressure of the hydraulic fluid provided by a hydraulic pump (36) which is driven by the drive motor (30).

6. Field chopper (10) according to claim 5, **characterised in that** the brake (52) automatically adopts the braking position due to the falling pressure of the hydraulic fluid upon switching off the drive motor (30).

7. Field chopper (10) according to one of the claims 1 to 6, **characterised in that** the brake (52) is coupled to the crop processing device by means of a drive connection and is disposed at a spacing therefrom.

8. Field chopper (10) according to claim 7, **characterised in that** the drive connection between the brake (52) and the crop processing device can be produced and separated by means of a hydraulically actuated drive coupling, **in that** the drive coupling is actuatable by a hydraulic drive (48) which can be operated by the pressure of the hydraulic fluid provided by a hydraulic pump (36) which is driven by the drive motor (30), and **in that** the pressure of the hydraulic fluid is buffered by an accumulator (50) so that the pressure of the hydraulic fluid in the hydraulic drive (48) after switching off the drive motor (30) remains present for an adequate time, during which also the drive coupling remains coupled and the brake (52) can act upon the crop processing device.

## Revendications

1. Ramasseuse-hacheuse (10) comportant un dispositif de traitement des récoltes (22), pouvant être entraîné en rotation et conçu sous forme d'un tambour de hachage, et un dispositif de sécurité, la rotation du dispositif de traitement des récoltes (22) pouvant être interrompue par un frein (52), **caractérisée en ce que** le dispositif de sécurité comporte une commande (64), qui est conçue pour contrôler une condition de sécurité de service et qui est couplée avec le frein (52), de telle sorte que le frein (52) exerce une action de freinage sur le dispositif de traitement des récoltes (22) lorsque la condition de sécurité de service n'est pas remplie.

2. Ramasseuse-hacheuse (10) selon la revendication 1, **caractérisée en ce que** la commande (64.) est conçue pour activer, en fonction de la condition de sécurité de service, un embrayage (38), monté entre le dispositif de traitement des récoltes et un mécanisme d'entraînement du dispositif de traitement des récoltes, et **en ce que** la commande (64) active le frein (52) au moins à peu près de manière synchrone avec l'embrayage (38).

3. Ramasseuse-hacheuse (10) selon la revendication 1 ou 2, **caractérisée en ce que** la commande (64) est reliée à un interrupteur de service (70) pour le dispositif de traitement des récoltes et/ou à un capteur de présence (72) conçu pour déceler la présence d'une personne de service sur le poste de service et/ou à un interrupteur de contact (68) conçu pour activer ou désactiver un moteur d'entraînement (30).

4. Ramasseuse-hacheuse (10) selon l'une quelconque des revendications 1 à 3, **caractérisée en ce que** le frein (52) peut être activé ou désactivé par voie hydraulique.

5. Dispositif de sécurité selon la revendication 4, **caractérisé en ce que** le frein (52) est précontraint dans la position de freinage par un ressort (58) et peut être relâché sous l'effet de la pression du fluide hydraulique fourni par une pompe hydraulique (36) actionnée par le moteur d'entraînement (30).

6. Ramasseuse-hacheuse (10) selon la revendication 5, **caractérisée en ce que** le frein (52) revient automatiquement dans la position de freinage sous l'effet de la chute de pression du fluide hydraulique au moment de la désactivation du moteur d'entraînement (30).

7. Ramasseuse-hacheuse (10) selon l'une quelconque des revendications 1 à 6, **caractérisée en ce que** le frein (52) est couplé au dispositif de traitement des récoltes par l'intermédiaire d'une liaison d'entraînement et est agencé à distance de celui-ci.

8. Ramasseuse-hacheuse (10) selon la revendication 7, **caractérisée en ce que** la liaison d'entraînement entre le frein (52) et le dispositif de traitement des récoltes peut être établie et désolidarisée par un embrayage d'entraînement actionné par voie hydraulique, **en ce que** l'embrayage d'entraînement peut être actionné par un système d'entraînement hydraulique (48) qui peut être actionné sous l'effet de la pression d'un fluide hydraulique fourni par une pompe hydraulique (36) actionnée par le moteur d'entraînement (30), et **en ce que** la pression du fluide hydraulique est égalisée par un accumulateur hydraulique (50), de telle sorte que la pression du fluide hydraulique dans le système d'entraînement hydraulique (48) reste maintenue après la désactivation du moteur d'entraînement (30) pendant un laps de temps suffisant pendant lequel l'embrayage d'entraînement reste également embrayé et le frein (52) peut agir sur le dispositif de traitement des récoltes.
